# EUROPÄISCHE PATENTSCHRIFT

(11) **EP 1 895 211 B1**
(45) Veröffentlichungstag und Bekanntmachung des Hinweises auf die Patenterteilung: **08.01.2014**
(21) Anmeldenummer: 07016638.4
(22) Anmeldetag: 24.08.2007
(51) Int. Cl.: F16K 11/078, E03C 1/05

(54) **Ventileinrichtung für Sanitärarmatur und Sanitärarmatur**
Valve device for a bathroom fitting and bathroom fitting
Dispositif de ventilation pour une armature sanitaire et armature sanitaire

(30) Priorität: 30.08.2006 DE 102006040558
(43) Veröffentlichungstag der Anmeldung: 05.03.2008
(73) Patentinhaber: Aquis Sanitär AG, 9445 Rebstein (CH)
(72) Erfinder: Büchel, Helmut, 9435 Heerbrugg (CH); Matt, Günther, 6800 Feldkirch (AT)
(74) Vertreter: Ostertag, Ulrich

(56) Entgegenhaltungen:
- EP-A1- 0 309 443
- US-A1- 2006 162 793
- US-A1- 2007 044 850

## Beschreibung

Die Erfindung betrifft eine Ventileinrichtung für eine Sanitärarmatur nach dem Oberbegriff des Anspruchs 1 sowie eine Sanitärarmatur nach dem Oberbegriff des Anspruchs 2 .

Aus der DE OS 27 39 587 ist eine als Einhand-Mischventil bezeichnete Sanitärarmatur bekannt. Ihre Ventileinrichtung enthält ein erstes Steuerglied, das als raumfest in einem Gehäusekörper angebrachte Festscheibe ausgeführt ist und das als Durchtrittsöffnungen gestaltete Zulaufkanäle aufweist. Eine auf der Festscheibe translatorisch und rotatorisch verschiebbare, als zweites Steuerglied vorgesehene Regelscheibe ist mit einem als Regelausnehmung bezeichneten Steuerkanal versehen. Die Regelausnehmung kann in unterschiedliche Überlappung mit den Durchtrittsöffnungen der Festscheibe gebracht werden. Durch das Zusammenwirken der beiden Steuerglieder, insbesondere durch die Wirkverbindung der Kegelausnehmung mit den Durchtrittsöffnungen, können freie Querschnitte von Warm- und Kaltwasserleitungen, die an den Durchtrittsöffnungen angeschlossen sind, variiert werden. Damit können in Ahängigkeit von der Relativposition der Steuerglieder Volumenstrome von kaltem und/oder warmem Wasser in einen gemeinsamen Ablaufkanal abströmen. Die Steuerglieder ermöglichen somit eine Einstellung des Mischungsverhältnisses zwischen kaltem und warmem Wasser und damit die Einstellung der Wassertemperatur. Die Steuerglieder ermöglichen auch eine Einstellung des Gesamtvolumenstroms für das Gemisch aus kaltem und warmem Wasser, das in den gemeinsamen Ablaufkanal abströmt. Die bekannte Ventileinrichtung wird für Sanitärarmaturen eingesetzt, wie sie beispielsweise für Handwaschbecken oder für Dusch- oder Badewannen Verwendung finden.

Eine Ventileinrichtung für eine Sanitärarmatur sowie eine Sanitärarmatur der eingangs genannten Art ist aus der US 2006/0162793 A1 bekannt geworden. Diese weist gegenüber der oben genannten Einrichtung mindestens einen zweiten Auslaufkanal auf, welcher alternativ zum ersten Auslaufkanal mit den Zulaufkanälen verbunden werden kann.

Aufgabe der vorliegenden Erfindung ist es, eine Ventileinrichtung für eine Sanitärarmatur sowie eine Sanitärarmatur bereitzustellen, die eine vielseitigere Einsetzbarkeit ermöglichen.

Diese Aufgabe wird durch eine Ventileinrichtung nach dem Anspruch 1 sowie durch eine Sanitärarmatur nach dem Anspruch 14 gelöst.

Gemäß einem ersten Aspekt der Erfindung ist eine Ventileinrichtung nach dem Oberbegriff des Anspruchs 1 vorgesehen, bei der ein Zusatzkanal in einer permanenten, kommunizierenden Verbindung mit dem Steuerkanal steht, wodurch unabhängig von der Relativposition der Steuerglieder eine kommunizierende Verbindung des Zusatzkanals mit zumindest einem der Zulaufkanäle gewährleistet ist. Der Zusatzkanal kann mit einem Auslauf einer Sanitärarmatur kommunizierend verbunden sein und ermöglicht dadurch die Bereitstellung eines permanenten Volumenstroms von Wasser zwischen dem zumindest einen Zulaufkanal und dem Auslauf.

Bei einer bevorzugten Ausführungsform der Erfindung ist der Steuerkanal für eine, vorzugsweise stufenlose, Einstellung von freien Öffnungsquerschnitten der Zulaufkanäle in Abhängigkeit von der relativen Stellung der Steuerglieder ausge-bildet. Dies ermöglicht eine Einstellung von Volumenströmen der jeweils an den Zulaufkanälen bereitgestellten Fluide, die durch den Steuerkanal in den Ablaufkanal und/oder in den Zusatzkanal einströmen. Damit kann ein beispielsweise ein Mischungsverhältnis zwischen Strömen von kaltem und warmem Wasser, das an den Zulaufkanälen bereitgestellt wird, eingestellt werden. Bei einer bevorzugten Ausführungsform der Erfindung ist der Steuerkanal derart ausgebildet, dass eine rotatorische Relativbewegung der Steuerglieder eine Veränderung des Verhältnisses der freien Querschnitte der Zulaufkanäle und damit die Veränderung eines Mischungsverhältnisses der bereitgestellten Fluide bewirkt.

Zweckmäßig ist es, wenn der Steuerkanal für eine, vorzugsweise stufenlose, Einstellung eines freien Öffnungsquerschnittes des Ablaufkanals ausgebildet ist. Dies erlaubt eine freie Einstellung des in den Ablaufkanal abströmenden Volumenstroms, der an den Zulaufkanälen bereitgestellt wird. Vorzugsweise kann dadurch sichergestellt werden, dass der abströmende Volumenstrom unabhängig von der Einstellung des Verhältnisses der freien Öffnungsquerschnitte der Zulaufkanäle gesteuert werden kann. Das heißt, dass bei einer Bereitstellung von kaltem und warmem Wasser an den Zulaufkanälen die Temperatur des abströmenden Wassers unabhängig von einem Volumenstrom des abströmenden Wassers eingestellt werden kann. Bei einer besonders bevorzugten Ausführungsform der Erfindung ist der Steuerkanal derart ausgebildet, dass eine translatorische Relativbewegung der Steuerglieder eine Einstellung des freien Öffnungsquerschnitts des Ablaufkanals bewirkt.

In weiterer Ausgestaltung der Erfindung ist vorgesehen, dass der Steuerkanal derart gestaltet ist, dass die kommunizierende Verbindung des Zusatzkanals mit den Zulaufkanälen unabhängig von der Relativposition des Steuerkanals ist. Dadurch wird sichergestellt, dass das Mischungsverhältnis der im Steuerkanal bereitgestellten Fluide für den Zusatzkanal identisch mit dem Mischungsverhältnis der Fluide im Ablaufkanal ist. Damit kann ein Benutzer durch Einstellen der Relativstellung der Steuerglieder beispielsweise die Wassertemperatur am Ablaufkanal einstellen. Die somit eingestellte Wassertemperatur liegt dann auch für das am Zusatzkanal bereitgestellte Wassergemisch vor. Damit weisen mit einer gemeinsamen Einstellung der Steuerglieder die für den Ablaufkanal wie für den Zusatzkanal bereitgestellten Volumenströme das gleiche Mischungsverhältnis hinsichtlich der an den Zulaufkanälen bereitgestellten Fluide auf. Die Wassertemperatur am Zusatzkanal ist somit unabhängig davon, ob der Ablaufkanal durch die Steuerglieder geöffnet ist oder nicht.

Zweckmäßig ist es, wenn zumindest ein Steuerglied aus einem keramischen Werkstoff hergestellt ist. Durch die Verwendung von keramischem Werkstoff für zumindest ein Steuerglied lässt sich eine verschleißarme, dauerhaft abdichtende Ventileinrichtung schaffen. Dies gilt insbesondere dann, wenn alle Steuerglieder aus keramischen Werkstoffen hergestellt sind.

Bei einer bevorzugten Ausführungsform der Erfindung liegen die Steuerglieder mit Planflächen bereichsweise abdichtend aneinander an. Dies stellt eine vorteilhafte Gestaltung für die Dichtflächen dar, da sich Planflächen, insbesondere beim Einsatz von keramischen Werkstoffen, durch Polierverfahren mit hoher Präzision zu geringen Kosten herstellen lassen.

Bei einer bevorzugten Ausführungsform der Erfindung sind die Zulaufkanäle, der Ablaufkanal, der Steuerkanal und der Zusatzkanal an den Steuergliedern verwirklicht. Damit können die Kanäle in vorteilhafter Weise hinsichtlich ihrer geometrischen Gestaltung aufeinander abgestimmt werden, da sie im Wesentlichen unabhängig von der Sanitärarmatur sind, in die die Ventileinrichtung eingebaut werden soll. Zudem wird dadurch eine von der Sanitärarmatur unabhängige Funktionsprüfung der Steuerglieder ermöglicht, da die Steuerung der Volumenströme unmittelbar von den Steuergliedern vorgenommen wird.

Zweckmäßig ist es, wenn ein erstes Steuerglied mit den Zulaufkanälen, mit dem Ablaufkanal und mit dem Zusatzkanal versehen ist. Damit sind alle Kanäle, die typischerweise mit korrespondierenden, an der Sanitärarmatur vorgesehenen Zu- und Ableitungen verbunden sind, an einem Steuerglied verwirklicht. Dieses Steuerglied kann dadurch in vorteilhafter Weise fest in eine Ventilkartusche oder unmittelbar in die Sanitärarmatur eingebaut werden. Die Zu- und Ableitungen in der Sanitärarmatur können als starre Rohrleitungen und/oder als Bohrungen ausgeführt werden. Flexible Verbindungen zwischen den Kanälen der Steuerglieder und den Zu- und Ableitungen sind nicht erforderlich.

In weiterer Ausgestaltung der Erfindung ist vorgesehen, dass das zweite Steuerglied mit dem Steuerkanal versehen ist. Das zweite Steuerglied dient somit der variablen Beeinflussung der freien Öffnungsquerschnitte der Zulaufkanäle und der Steuerung des freien öffnungsquerschnitts des Ablaufkanals. Zu diesem Zweck wird das zweite Steuerglied beweglich in der Sanitärarmatur angeordnet. Da das zweite Steuerglied unmittelbar mit dem ersten Steuerglied zusammenwirkt und keine kommunizierenden Verbindungen zur Sanitärarmatur notwendig sind, kann somit eine einfach zu.montierende und kostengünstige Ventileinrichtung verwirklicht werden.

Bei einer bevorzugten Ausführungsform der Erfindung sind die Zulaufkanäle und der Ablaufkanal als Kreisringabschnitte konzentrisch, insbesondere mit gleicher Winkelteilung, an dem ersten Steuerglied angebracht. Durch diese Gestaltung kann eine gleichmäßige und damit insbesondere bei der Verwendung von keramischem Werkstoff vorteilhafte Verteilung innerer Spannungen im Material des ersten Steuerglieds verwirklicht werden. Innere Spannungen können insbesondere durch Temperaturunterschiede der an den Zulaufkanälen bereitgestellten Fluide, insbesondere bei Warm- und Kaltwasser, auftreten. Die als Kreisringabschnitte ausgeführten Kanäle können jeweils endseitig mit Abrundungen zur Vermeidung von Kerbwirkungen versehen sein. Der Rundungsradius der Abrundungen entspricht vorzugsweise der halben Breite der Kreisringabschnitte.

In weiterer Ausgestaltung der Erfindung ist vorgesehen, dass der, insbesondere als Durchgangsbohrung ausgeführte, Zusatzkanal konzentrisch zu den Zulaufkanälen und dem Ablaufkanal am ersten Steuerglied angeordnet ist. Damit kann eine platzsparende Anordnung des Zusatzkanals verwirklicht werden. Zudem lässt sich dadurch in einfacher Weise sicherstellen, dass der Zusatzkanal über den Steuerkanal unabhängig von der rotatorischen und/oder der translatorischen Relativposition der Steuerglieder stets in kommunizierender Verbindung mit zumindest einem Zulaufkanal steht.

In weiterer Ausgestaltung der Erfindung ist vorgesehen, dass der Steuerkanal derart ausgebildet ist, dass der vom Steuerkanal maximal freigebbare Querschnitt des Ablaufkanals zumindest im Wesentlichen dem Querschnitt des Zusatzkanals entspricht. Dadurch wird erreicht, dass bei einem maximalen Öffnen des Ablaufkanals durch den Steuerkanal im Wesentlichen gleiche Volumenströme von den Zulaufkanälen an den Ablaufkanal sowie an den Zusatzkanal abströmen können.

Zweckmäßig ist es, wenn der der Steuerkanal eine Ausnehmung aufweist, die einen ersten Bereich mit vorzugsweise zylindrischem Querschnitt und einem zweiten Bereich mit dreiecksähnlichem Querschnitt umfasst. Der erste Bereich der Ausnehmung ist bei zusammengebauter Ventileinrichtung im Bereich des Zusatzkanals angeordnet, der in dem ersten Steuerglied vorgesehen ist. Der zweite Bereich der Ausnehmung ist oberhalb der im ersten Steuerglied vorgesehenen, kreisringabschnittsförmigen Zulaufkanäle angeordnet und ermöglicht die stellungsabhängige Freigabe der Zulaufkanäle. Da der erste und der zweite Bereich der Ausnehmung in kommunizierender Verbindung stehen, wird die gewünschte permanente kommunizierende Verbindung zwischen zumindest einem Zulaufkanal und dem Zusatzkanal unabhängig von der Relativposition der Steuerglieder verwirklicht. Bei einer bevorzugten Ausführungsform der Erfindung sind die Steuerglieder scheibenförmig ausgeführt und die Kanäle des einen Steuergliedes sowie die Ausnehmung des anderen Steuergliedes sind spiegelsymmetrisch zu einer Mittelachse der Scheiben angeordnet. Darüber hinaus kann bei einer besonders bevorzugten Ausführungsform der Erfindung vorgesehen sein, dass die Zu- und Ablaufkanäle des einen Steuergliedes drehsymmetrisch zur Mittelachse der Scheiben ausgerichtet sind.

Gemäß einem weiteren Aspekt der Erfindung ist eine Sanitärarmatur mit zumindest einem Kaltwasserzulaufanschluss und zumindest einem warmwasserzulaufanschluss vorgesehen, die eine erfindungsgemäße Ventileinrichtung enthält. Bei einer Sanitärarmatur kann vorgesehen sein, dass der Ablaufkanal mit einem ersten, ventilfrei ausgebildeten Auslauf kommunizierend verbunden ist. Ergänzend oder alternativ kann vorgesehen sein, dass der Zusatzkanal mit einem zweiten Auslauf kommunizierend verbunden ist, der mit einem Auslaufventil zum Öffnen und Verschließen des freien Querschnitts des Auslaufs versehen ist. Eine Sanitärarmatur, die nur einen ventilfreien Auslauf aufweist, wird lediglich aus Gründen der Kostenersparnis mit einer erfindungsgemäßen Ventileinrichtung versehen, da keine Verwendung für den Zusatzkanal vorliegt. Da jedoch die Ventileinrichtung in einer bevorzugten Ausführungsform vollständig kompatibel zu bekannten Ventileinrichtungen ausgeführt ist, die ausschließlich für Sanitärarmaturen ohne zweiten Auslauf bestimmt sind, kann durch die höheren Produktionsstückzahlen für die erfindungsgemäße Ventileinrichtung ein Kostenvorteil bewirkt werden. Gleiches gilt für eine Sanitärarmatur, die ausschließlich mit einem Auslauf ausgestattet ist, der ein Auslaufventil aufweist und bei dem die Ventileinrichtung nur zur Einstellung der Wassertemperatur dient.

Der besondere Vorteil der erfindungsgemäßen Ventileinrichtung liegt darin, dass sie in den beiden vorgenannten Typen von Sanitärarmaturen eingesetzt werden kann. Darüber hinaus kann die erfindungsgemäße Ventileinrichtung auch für eine Sanitärarmatur verwendet werden, die sowohl einen ventilfreien Auslauf als auch einen Auslauf mit Ventileinrichtung aufweist und die damit gegenüber bekannten Sanitärarmaturen einen erweiterter Funktionsumfang aufweist. Neben der Reduzierung von Produktionskosten durch höhere Stückzahlen für die Ventileinrichtung werden auch Logistikkosten reduziert, da nur noch ein Typ ventileinrichtung für die drei vorstehend beschriebenen, unterschiedlich ausgestalteten Sanitärarmaturen bereitgehalten werden muss.

Zweckmäßig ist es, wenn das Auslaufventil ein Stellglied aufweist, das für eine ferngesteuerte, insbesondere fremdkraftbetätigte, Ansteuerung des Auslaufventils ausgebildet ist. Ein Stellglied kann insbesondere als hydraulisch oder pneumatisch ansteuerbarer Zylinder, als Magnetspule oder als piezoelektrischer Bewegungswandler ausgeführt sein. Eine ferngesteuerte Ansteuerung des Auslaufventils ist insbesondere bei Sanitärarmaturen an Waschtischen für Großküchen, Artztpraxen oder Krankenhäusern sinnvoll. An diesen Stellen müssen strenge Hygiene- oder Desinfektionsanforderungen eingehalten werden. So kann vorgeschrieben sein, dass nach dem Reinigen der Hände unter Verwendung von Wasser aus der Sanitärarmatur der Betätigungshebel, den Sanitärarmaturen zum Einstellen der Wassermenge- und Wassertemperatur typischerweise aufweisen, nicht mehr berührt werden darf. Aus diesem Grund kann beispielsweise eine Fußbetätigung der Sanitärarmatur vorgesehen werden, mit der zumindest die Wassermenge beeinflusst werden kann.

Bei einer vorteilhaften Ausführungsform der Erfindung kann beispielsweise an einem ersten Waschtisch, an dem die erfindungsgemäße Sanitärarmatur angebracht ist, ein Benutzer seine Hände vorreinigen. Dabei kann er den Bedienhebel der Sanitärarmatur einsetzen, um eine angenehme Wassertemperatur und eine ausreichende Wassermenge einzustellen. Nach Beendigung des ersten Handwaschvorgangs wird der Wasserfluss mit dem Bedienhebel der Sanitärarmatur beendet. Anschließend tritt der Benutzer an einen benachbarten Waschtisch, der über einen Auslauf mit dem Zusatzkanal der Ventileinrichtung in der Sanitärarmatur verbunden ist. Der Zusatzkanal ist beispielsweise mit einem Auslaufventil ausgestattet, das mit einem Fußschalter angesteuert werden kann. An diesem Waschtisch kann der Benutzer nun die endgültige Handreinigung vornehmen, wobei die vorher am Bedienhebel gewählte Wassertemperatur erhalten bleibt und die Dosierung des Wasserstroms mittels des Fußschalters vorgenommen wird.

Bei einer bevorzugten Ausführungsform der Erfindung ist eine berührungsfrei schaltende Sensoreinrichtung für die Erzeugung eines Steuersignals ausgebildet, das für eine, vorzugsweise elektrische, Ansteuerung des Stellglieds vorgesehen ist. Damit kann eine Ansteuerung des Auslaufventils vollkommen berührungsfrei erfolgen. Vorzugsweise ist die berührungsfrei schaltende Sensoreinrichtung als Lichtschranke oder als kapazitiver Näherungssensor ausgeführt und erzeugt ein elektrisches Schaltsignal, mit dem das Stellglied angesteuert werden kann. Bei einer besonders bevorzugten Ausführungsform der Erfindung ist die Sensoreinrichtung in der Sanitärarmatur im Bereich des Auslaufs angebracht, so dass eine Annäherung eines Gegenstands, insbesondere der Hand des Benutzers, in einen Erfassungsbereich der Sensoreinrichtung ein Schaltsignal hervorruft und zu einem Wasserstrom aus dem zweiten Auslauf führt.

Weitere Vorteile und Merkmale der Erfindung ergeben sich aus den Patentansprüchen sowie aus der nachfolgenden Beschreibung bevorzugter Ausführungsbeispiele, die in der Zeichnung dargestellt sind. Dabei zeigen:
- Fig. 1: eine schematische Darstellung einer Ventileinrichtung gemäß der Erfindung,
- Fig. 2: eine Vorderansicht einer aus zwei Steuerscheiben gebildeten Ventileinrichtung in einer neutralen schließstellung,
- Fig. 3: eine seitliche Schnittdarstellung der Steuerscheiben gemäß der Fig. 2,
- Fig. 4: eine Rückansicht der beiden Steuerscheiben gemäß den Fig. 2.und 3,
- Fig. 5: eine Vorderansicht der Steuerscheiben gemäß der Fig. 2 in einer mittleren Öffnungsstellung,
- Fig. 6: eine Vorderansicht der Steuerscheiben gemäß der Fig. 2 in einer ausgelenkten Öffnungsstellung,
- Fig. 7: eine Vorderansicht der Steuerscheiben gemäß der Fig. 2 in einer ausgelenkten Schließstellung.

Eine Ventileinrichtung 10 ist als eigenständige Baugruppe, die auch als Mischkartusche bezeichnet wird, für die Verwendung in einer nicht dargestellten Sanitärarmatur, insbesondere in einem Wasserhahn für einen Waschtisch, vorgesehen. In der Sanitärarmatur sind Zuleitungen 12, 14 vorgesehen, die mit einem ersten Zulaufkanal 16 für warmes Wasser und mit einem zweiten Zulaufkanal 18 für kaltes Wasser der Ventileinrichtung 10 verbunden sind.

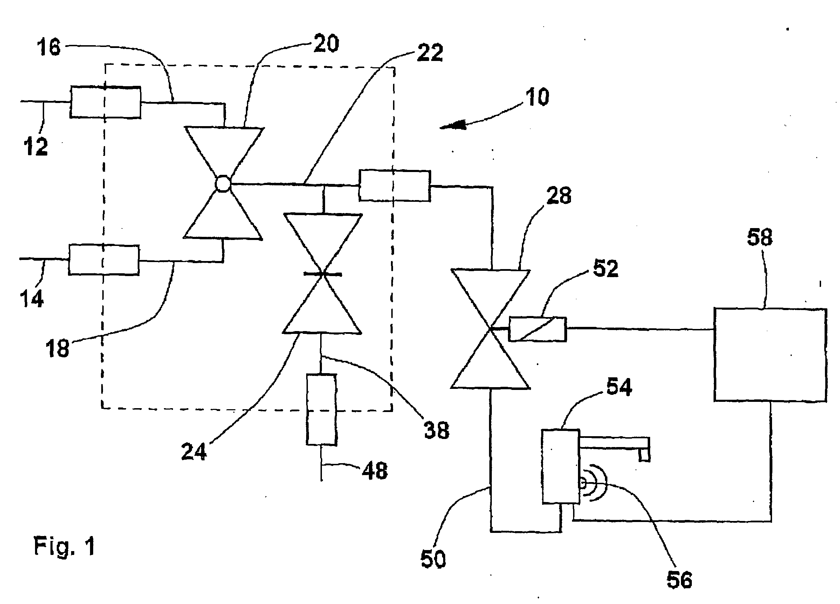

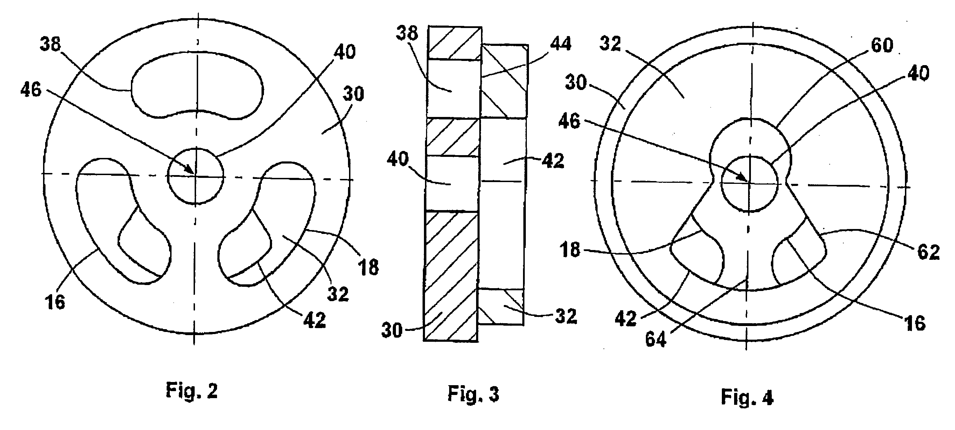

Die Ventileinrichtung 10 weist gemäß dem hydraulischen Schaltbild der Fig. 1 ein Mischventil 20 auf, an das der erste Zulaufkanal 16 und der zweite Zulaufkanal 18 angeschlossen sind. Das Mischventil 20 ermöglicht eine Mischung des vom ersten Zulaufkanal 16 bereitgestellten warmen Wassers mit dem vom zweiten Zulaufkanal 18 bereitgestellten kalten Wasser in einem stufenlos einstellbaren Mischungsverhältnis. Eine nähere Darstellung der Funksweise des Mischventils 20 zur Durchführung des Mischvorgangs erfolgt in der nachstehenden Beschreibung für die Fig. 2 bis 7.

Das vom Mischventil 20 gemischte Wasser wird an einen Mischkanal 22 abgegeben. Der Mischkanal 22 ist innerhalb der Ventileinrichtung 10 mit einem separat dargestellten Absperrventil 24 verbunden, das für das Öffnen oder Verschließen eines Ablaufkanals 38 vorgesehen ist, der in einen ersten Auslauf 48 mündet.

Das Absperrventil 24 kann zusammen mit dem Mischventil 20 mittels eines nicht dargestellten Bedienhebels angesteuert werden. Dabei kann der Bedienhebel derart ausgeführt sein, dass eine Schwenkbewegung um eine erste Bewegungsachse zu einer Stellbewegung für das Mischventil 20 führt. Hingegen führt eine Schwenkbewegung um eine zweite Schwenkachse, die vorzugsweise orthogonal zur ersten Schwenkachse ausgerichtet ist, zu einer Stellbewegung für das Absperrventil 24. Somit kann mit Hilfe eines einzigen Bedienhebels sowohl Einfluss auf einen Volumenstrom als auch auf eine Temperatur des Wassers genommen werden, das aus dem Auslauf 48 strömt.

Der Mischkanal 22 wird durch einen Zusatzkanal 38 fortgeführt, dem ein außerhalb der Ventileinrichtung 10 vorgesehenes, elektrisch ansteuerbares Auslaufventil 28 zugeordnet ist. Das Auslaufventil 28 ist mit einem als Stellglied vorgesehenen, elektrisch ansteuerbaren Magnetschalter 52 verwirklicht. Das Auslaufventil 28 ist zwischen den permanent druckbeaufschlagten Mischkanal 22 und einen zweiten Auslauf 50 geschaltet. Dadurch ist eine von der Stellung der Ventileinrichtung 10 unabhängige Beeinflussung eines Wasserstroms von den Zuleitungen 12, 14 in den Auslauf 50 möglich. Für die Ansteuerung des Magnetschalters 52 ist eine Sensoreinrichtung in Form eines Infrarotsensors 56 an einer Sanitärarmatur 54 angebracht. Der Infrarotsensor 56 erzeugt bei Annäherung von Gegenständen oder der Hände eines Benutzers ein Schaltsignal, das in einer Steuereinheit 58 in ein Schaltsignal für den Magnetschalter 52 umgesetzt wird. Der Magnetschalter 52 steuert.das Auslaufventil 28 an, das den zweiten Auslauf 50 freigibt, wodurch das Wasser aus dem Mischkanal 22 austreten kann. Da die Temperatur des im Mischkanal 22 strömenden Wassers von dem am Mischventil 20 eingestellten Mischungsverhältnis abhängt und der zweite Auslauf 50 ebenfalls mit dem Mischkanal 22 verbunden ist, hat auch das am Auslaufventil 28 ausströmende Wasser die am Mischventil 20 vorgegebene Temperatur.

Die Schnittstellen zwischen den Zuleitungen 12, 14 und den Zulaufkanälen 16, 18 sowie zwischen dem Mischkanal 22 und dem Auslaufventil 28 können beispielsweise als abgedichtete Schraubverbindungen ausgeführt sein.

Bei dem nachfolgend näher dargestellten Ausführungsbeispiel gemäß der Fig. 2 bis 7 sind das Mischventil 20 und das Absperrventil 24 in einer gemeinsamen Baugruppe verwirklicht.

Die in den Fig. 2 bis 4 in einer neutralen Schließstellung dargestellte Ventileinrichtung 10 weist ein erstes Steuerglied auf, das als erste Steuerscheibe 30 ausgeführt ist, und ein zweites Steuerglied, das als zweite Steuerscheibe 32 ausgeführt ist. Beide Steuerscheiben 30, 32 sind jeweils als planparallele Zylinderabschnitte aus einem keramischen Material hergestellt. Gegenüberliegende Oberflächen der Steuerscheiben 30, 32 sind als ebene, plane Dichtflächen 44 mit einer besonders glatten, insbesondere polierten, Oberfläche, ausgeführt. Die erste Steuerscheibe 30 weist drei im Wesentlichen gleichartig geformte, kreisringsegmentförmige Ausnehmungen 16, 18, 38 auf, die konzentrisch zu einer Mittelachse 46 angeordnet sind. Die Ausnehmungen 16, 18 ,38 sind jeweils endseitig mit einem Radius verrundet, der im Wesentlichen der Schlitzbreite der Ausnehmungen 16, 18, 38 entspricht. Die Ausnehmungen 16, 18, 38 sind mit einer Winkelteilung von 120 Grad zueinander angeordnet und jeweils radialsymmetrisch ausgeführt. Die Ausnehmung 16 dient als erster Zulaufkanal, während die Ausnehmung 18 als zweiter Zulaufkanal vorgesehen ist. Der erste Zulaufkanal 16 und der zweite Zulaufkanal 18 sind in nicht dargestellter Weise mit Zuleitungen der nicht dargestellten Sanitärarmatur für warmes und kaltes Wasser verbunden. Die Ausnehmung 38 ist als Ablaufkanal vorgesehen und ist in nicht dargestellter Weise mit dem in der Fig. 1 schematisch dargestellten Mischkanal 22 verbunden. Konzentrisch zu den Kanälen 16, 18, 38 ist ein Zusatzkanal 40 vorgesehen, der als zylindrische Bohrung in der ersten Steuerscheibe 30 eingebracht ist und dessen Funktion nachstehend näher erläutert werden wird.

Die erste Steuerscheibe 30 weist einen größeren Durchmesser auf und ist als Festscheibe für einen raumfesten Einbau in einer Mischerkartusche oder unmittelbar in einer Sanitärarmatur vorgesehen.

Die zweite Steuerscheibe 32, die einen kleineren Durchmesser aufweist, liegt mit der Dichtfläche 44 auf der ersten Dichtscheibe 30 auf und ist mit einer als Steuerkanal 42 ausgeführten Steuerausnehmung versehen. Der Steuerkanal 42 ist bei der vorliegenden Ausführungsform aus produktionstechnischen Gründen vollständig durchgebrochen. Aus hydraulischer Sicht wäre es ausreichend, wenn der Steuerkanal 42 als der ersten Steuerscheibe 30 zugewandte Vertiefung in der zweiten Steuerscheibe 32 verwirklicht wäre. Der Steuerkanal 42 weist einen schlüssellochähnlichen Querschnitt auf. Der Querschnitt des Steuerkanals 42 setzt sich aus einem ersten, im Wesentlichen kreiszylindrischen Ausnehmungsbereich 60 und einem zweiten, dreiecksähnlichen Ausnehmungsbereich 62 zusammen, die kommunizierend miteinander verbunden sind. Die beiden Ausnehmungsbereiche 60, 62 sind spiegelsymmetrisch zur Mittelebene der Steuerscheibe 32.

Das Zusammenwirken der Kanäle 16, 18, 38, 40 und 42 geht aus den Darstellungen der Fig. 2 bis 7 hervor. In den Fig. 2 bis 4 liegt eine neutrale Verschlussstellung der Steuerscheiben 30, 32 vor. Dabei ist die Steuerscheibe.32 konzentrisch zur Steuerscheibe 30 angeordnet und ihre Symmetrieebene ist auf die Symmetriebeben der anderen Steuerscheibe 30 ausgerichtet. In dieser Stellung gibt der Steuerkanal 42 für die beiden Zulaufkanäle 16 und 18 jeweils den gleichen Öffnungsquerschnitt frei. Damit steht im Steuerkanal 42 unter der Voraussetzung gleicher Wasserdrücke in beiden Zulaufkanälen 16, 18 ein Gemisch mit gleichen Anteilen aus den beiden Zulaufkanälen 16, 18 zur Verfügung. Der Steuerkanal 42 bildet gleichzeitig auch den Mischkanal 22. Das im Steuerkanal 42 vorliegende Gemisch aus warmem und kaltem Wasser kann nur in den Zusatzkanal 40 abströmen, da der Ablaufkanal 38 durch die zweite Steuerscheibe 42 verschlossen ist. Ein Abströmen des Gemisches in den Zusatzkanal 40 findet jedoch nur statt, wenn das in den Fig. 2 bis 7 nicht dargestellte Auslaufventil geöffnet ist, ansonsten findet kein Volumenstrom in der Ventileinrichtung 10 statt.

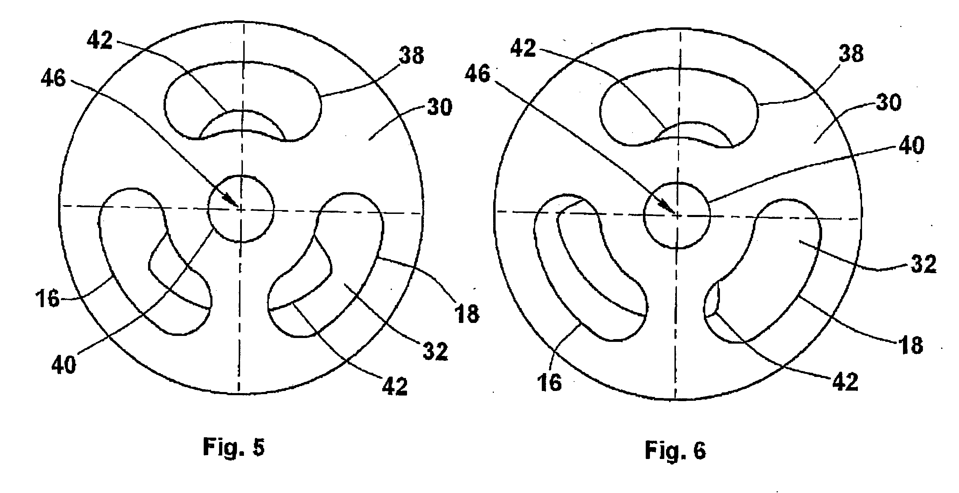

Bei der Darstellung gemäß der Fig. 5 nimmt die zweite Steuerscheibe 42 nicht mehr die konzentrische Stellung gegenüber der ersten Steuerscheibe 40 ein. Vielmehr ist die zweite Steuerscheibe 42 derart verschoben angeordnet, dass der Steuerkanal 42 über den Ablaufkanal 38 hinausragt und somit einen Querschnitt freigibt, durch den das Wasser in den Ablaufkanal 38 einströmen kann. Durch die schlüssellochartige Gestaltung des Steuerkanals 42 ist gewährleistet, dass trotz der translatorischen Verschiebung der Steuerscheibe 32 jeweils ausreichende, freie Querschnitte der beiden Zulaufkanäle 16, 18 vorliegen, um sowohl den Ablaufkanal 38 als auch den Zusatzkanal 40 mit einer ausreichenden Wassermenge versorgen zu können. Bei der Stellung der Steuerscheibe 42 gemäß der Fig. 5 werden sowohl der Ablaufkanal 38 als auch der Zusatzkanal 40 mit nahezu gleichen Volumenströmen versorgt.

Gleiches gilt auch für die Stellung der zweiten Steuerscheibe 42 gemäß der Fig. 6, bei der eine Rotation um die Mittelachse 46 stattgefunden hat. Durch die Rotation wird der Steuerkanal 42 verlagert und verengt den freien Querschnitt des zweiten Zulaufkanals 18, so dass das dort zur Verfügung gestellte kalte Wasser nur noch einen geringen Anteil am Gemisch im Steuerkanal 42 hat. Der freie Querschnitt des ersten Zulaufkanals 16 wird hingegen vergrößert, so dass der Anteil des durch den ersten Zulaufkanal 16 strömenden Warmwassers im Steuerkanal 42 überwiegt. Der Steuerkanal 42 versorgt in der Fig. 6 sowohl den Zusatzkanal 40 als auch den Ablaufkanal 38 mit einem überwiegend aus warmem Wasser bestehenden Gemisch.

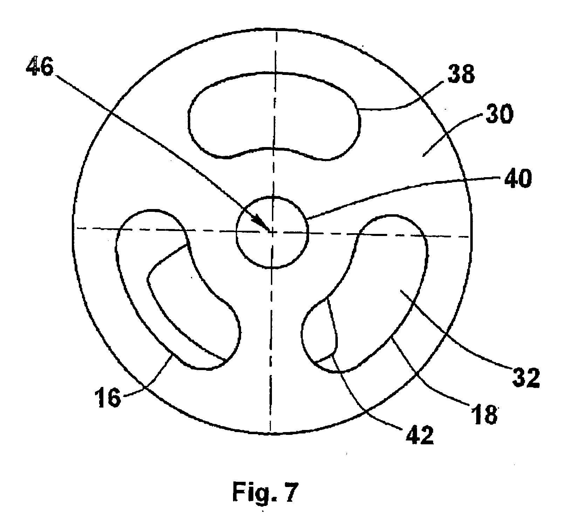

Gemäß der Fig. 7 wurde erneut eine translatorische Bewegung der Steuerscheibe 32 durchgeführt, wodurch der Ablaufkanal 38 wieder verschlossen wurde und das Gemisch im Steuerkanal 42 ausschließlich dem Zusatzkanal 40 zugeführt werden kann, sofern das nicht dargestellte Auslaufventil geöffnet ist.

## Patentansprüche

1. Ventileinrichtung für eine Sanitärarmatur mit zumindest zwei relativ zueinander beweglichen Steuergliedern (30, 32), an denen zumindest zwei Zulaufkanäle (16, 18) sowie zumindest ein Steuerkanal (42) ausgebildet sind, wobei der Steuerkanal (42) in Abhängigkeit von einer Relativposition der Steuerglieder (30, 32) für eine kommunizierende Verbindung zwischen zumindest einem der Zulaufkanäle (16, 18) und zumindest einem Ablaufkanal (38) gestaltet ist, und wobei ein Zusatzkanal (40) vorgesehen ist,
**dadurch gekennzeichnet, dass**
der Zusatzkanal (40) in einer permanenten, kommunizierenden Verbindung mit dem Steuerkanal (42) steht, wodurch unabhängig von der Relativposition der Steuerglieder (30, 32) eine kommunizierende Verbindung des Zusatzkanals (40) mit zumindest einem der Zulaufkanäle (16, 18) gewährleistet ist.

2. Ventileinrichtung nach Anspruch 1,
**dadurch gekennzeichnet, dass** der Steuerkanal (42) für eine, vorzugsweise stufenlose, Einstellung von freien Öffnungsquerschnitten der Zulaufkanäle (16, 18) in Abhängigkeit von der relativen Stellung der Steuerglieder (30, 32) ausgebildet ist.

3. Ventileinrichtung nach Anspruch 1 oder 2,
**dadurch gekennzeichnet, dass** der Steuerkanal (42) für eine, vorzugsweise stufenlose, Einstellung eines freien Öffnungsquerschnittes des Ablaufkanals (38) ausgebildet ist.

4. Ventileinrichtung nach Anspruch 2 oder 3, **dadurch gekennzeichnet, dass** der Steuerkanal (42) derart gestaltet ist, dass die kommunizierende Verbindung des Zusatzkanals (40) mit den Zulaufkanälen (16, 18) unabhängig von der Relativposition des Steuerkanals ist.

5. Ventileinrichtung nach einem der vorhergehenden Ansprüche, **dadurch gekennzeichnet, dass** zumindest ein Steuerglied (30, 32) aus einem keramischen Werkstoff hergestellt ist.

6. Ventileinrichtung nach einem der vorhergehenden Ansprüche, dass die Steuerglieder (30, 32) mit Planflächen (44) bereichsweise abdichtend aneinander anliegen.

7. Ventileinrichtung nach einem der vorhergehenden Ansprüche, **dadurch gekennzeichnet, dass** die Zulaufkanäle (16, 18), der Ablaufkanal (38), der Steuerkanal (42) und der Zusatzkanal (40) an den Steuergliedern (30, 32) verwirklicht sind.

8. Ventileinrichtung nach Anspruch 7, **dadurch gekennzeichnet, dass** ein erstes Steuerglied (30) mit den Zulaufkanälen (16, 18), mit dem Ablaufkanal (38) und mit dem Zusatzkanal (40) versehen ist.

9. Ventileinrichtung nach einem der Ansprüche 7 oder 8, **dadurch gekennzeichnet, dass** das zweite Steuerglied (32) mit dem Steuerkanal (42) versehen ist.

10. Ventileinrichtung nach einem der Ansprüche 7 bis 9, **dadurch gekennzeichnet, dass** die Zulaufkanäle (16, 18) und der Ablaufkanal (38) als Kreisringabschnitte konzentrisch, insbesondere mit gleicher Winkelteilung, an dem ersten Steuerglied (30) angebracht sind.

11. Ventileinrichtung nach einem der Ansprüche 7 bis 10, **dadurch gekennzeichnet, dass** der, insbesondere als Durchgangsbohrung ausgeführte, Zusatzkanal (40) konzentrisch zu den Zulaufkanälen (16, 18) und dem Ablaufkanal (38) am ersten Steuerglied (30) angeordnet ist.

12. Ventileinrichtung nach einem der vorhergehenden Ansprüche, **dadurch gekennzeichnet, dass** der Steuerkanal (42) derart ausgebildet ist, dass der vom Steuerkanal maximal freigebbare Querschnitt des Ablaufkanals (38) zumindest im Wesentlichen dem Querschnitt des Zusatzkanals (40) entspricht.

13. Ventileinrichtung nach einem der vorhergehenden Ansprüche, **dadurch gekennzeichnet, dass** der Steuerkanal (42) eine Ausnehmung aufweist, die einen ersten Bereich mit vorzugsweise zylindrischem Querschnitt (60) und einen zweiten Bereich mit dreiecksähnlichem Querschnitt (62) umfasst.

14. Sanitärarmatur mit zumindest einem Kaltwasserzulaufanschluss (14), zumindest einem Warmwasserzulaufanschluss (12) und mit einer Ventileinrichtung (10) zur Einstellung von freien Querschnitten der Zulaufanschlüsse (12, 14),
**gekennzeichnet durch**
eine Ventileinrichtung (10) nach einem der vorhergehenden Ansprüche.

15. Sanitärarmatur nach Anspruch 14, **dadurch**
**gekennzeichnet, dass** der Ablaufkanal (38) mit einem ersten, ventilfrei ausgebildeten Auslauf (48) kommunizierend verbunden ist.

16. Sanitärarmatur nach Anspruch 14 oder 15, **dadurch**
**gekennzeichnet, dass** der Zusatzkanal (40) mit einem zweiten Auslauf (50) kommunizierend verbunden ist, das mit einem Auslaufventil (28) zum Öffnen und Verschließen eines freien Querschnitts des Auslaufs (50) versehen ist.

17. Sanitärarmatur nach einem der Ansprüche 14, 15 oder 16, **dadurch gekennzeichnet, dass** das Auslaufventil (28) ein Stellglied (2) aufweist, das für eine ferngesteuerte, insbesondere fremdkraftbetätigte, Ansteuerung des Auslaufventils (28) ausgebildet ist.

18. Sanitärarmatur nach einem der Ansprüche 14 bis 17,
**dadurch gekennzeichnet, dass** eine berührungsfrei schaltende Sensoreinrichtung (56, 58) für die Erzeugung eines Steuersignals ausgebildet ist, das für eine, vorzugsweise elektrische, Ansteuerung des Stellglieds (52) vorgesehen ist.

## Claims

1. Valve device for a sanitary fitting having at least two control elements (30, 32) which are movable relative to one another and on which at least two inlet channels (16, 18) and at least one control channel (42) are formed, the control channel (42) being configured for a communicating connection between at least one of the inlet channels (16, 18) and at least one outlet channel (38), depending on a relative position of the control elements (30, 32), and wherein an additional channel (40) is provided,
**characterised in that**
an additional channel (40), is in a permanent, communicating connection with the control channel (42), whereby ensuring a communicating connection of the additional channel (40) with at least one of the inlet channels (16, 18), irrespective of the relative position of the control elements (30, 32).

2. Valve device according to Claim 1, **characterised in that** the control channel (42) is designed for a, preferably continuous, adjustment of free opening cross-sections of the inlet channels (16, 18), depending on the relative position of the control elements (30, 32).

3. Valve device according to Claim 1 or 2, **characterised in that** the control channel (42) is designed for a, preferably continuous, adjustment of a free cross-section of the outlet channel (38).

4. Valve device according to Claim 2 or 3, **characterised in that** the control channel (42) is configured in such a way that the communicating connection of the additional channel (40) with the inlet channels (16, 18) is independent of the relative position of the control channel.

5. Valve device according to one of the preceding claims, **characterised in that** at least one control element (30, 32) is produced from a ceramic material.

6. Valve device according to one of the preceding claims, **characterised in that** the control elements (30, 32) lie with plane surfaces (44) regionally sealingly against one another.

7. Valve device according to one of the preceding claims, **characterised in that** the inlet channels (16, 18), the outlet channel (38), the control channel (42) and the additional channel (40) are realised on the control elements (30, 32).

8. Valve device according to Claim 7, **characterised in that** a first control element (30) is provided with the inlet channels (16, 18), with the outlet channel (38) and with the additional channel (40).

9. Valve device according to one of Claims 7 or 8, **characterised in that** the second control element (32) is provided with the control channel (42).

10. Valve device according to one of Claims 7 to 9, **characterised in that** the inlet channels (16, 18) and the outlet channel (38) are formed as annulus segments concentrically, in particular with equal angular division, on the first control element (30) .

11. Valve device according to one of Claims 7 to 10, **characterised in that** the additional channel (40), in particular embodied as a through-bore, is arranged concentrically with the inlet channels (16, 18) and the outlet channel (38) on the first control element (30).

12. Valve device according to one of the preceding claims, **characterised in that** the control channel (42) is designed in such a way that the maximum cross-section of the outlet channel (38) which can be freed by the control channel corresponds at least substantially to the cross-section of the additional channel (40).

13. Valve device according to one of the preceding claims, **characterised in that** the control channel (42) has an opening comprising a first region with a preferably cylindrical cross-section (60) and a second region with a triangle-like cross-section (62) .

14. Sanitary fitting having at least one cold-water inlet connection (14), at least one hot-water inlet connection (12) and having a valve device (10) for adjusting free cross-sections of the inlet connections (12, 14),
**characterised by**
a valve device (10) according to one of the preceding claims.

15. Sanitary fitting according to Claim 14, **characterised in that** the outlet channel (38) is connected in a communicating manner to a first outlet (48) designed without a valve.

16. Sanitary fitting according to Claim 14 or 15, **characterised in that** the additional channel (40) is connected in a communicating manner to a second outlet (50), which is provided with an outlet valve (28) for opening and closing a free cross-section of the outlet (50) .

17. Sanitary fitting according to one of Claims 14, 15 or 16, **characterised in that** the outlet valve (28) has an actuator (2) which is designed for a remote, in particular external-power-actuated, control of the outlet valve (28).

18. Sanitary fitting according to one of Claims 14 to 17, **characterised in that** a contactlessly switching sensor device (56, 58) is designed for producing a control signal which is provided for a, preferably electrical, control of the actuator (52).

## Revendications

1. Dispositif de distribution destiné à une robinetterie sanitaire, comprenant au moins deux organes de commande (30, 32) mobiles l'un par rapport à l'autre et sur lesquels sont ménagés au moins deux canaux d'afflux (16, 18), ainsi qu'au moins un canal de commande (42), ledit canal de commande (42) étant conçu pour établir, en fonction d'une position relative desdits organes de commande (30, 32), une liaison communicante entre au moins l'un des canaux d'afflux (16, 18) et au moins un canal de décharge (38), sachant qu'il est prévu un canal additionnel (40),
**caractérisé par le fait que**
le canal additionnel (40) est en liaison communicante permanente avec le canal de commande (42), ce qui a pour effet de garantir, indépendamment de la position relative des organes de commande (30, 32), une liaison communicante dudit canal additionnel (40) avec au moins l'un des canaux d'afflux (16, 18).

2. Dispositif de distribution selon la revendication 1,
**caractérisé par le fait que** le canal de commande (42) est réalisé en vue d'un réglage, de préférence continu, de sections transversales libres d'ouverture des canaux d'afflux (16, 18) en fonction de la position relative des organes de commande (30, 32).

3. Dispositif de distribution selon la revendication 1 ou 2,
**caractérisé par le fait que** le canal de commande (42) est réalisé en vue d'un réglage, de préférence continu, d'une section transversale libre d'ouverture du canal de décharge (38).

4. Dispositif de distribution selon la revendication 2 ou 3, **caractérisé par le fait que** le canal de commande (42) est conçu de telle sorte que la liaison communicante du canal additionnel (40), avec les canaux d'afflux (16, 18), soit indépendante de la position relative dudit canal de commande.

5. Dispositif de distribution selon l'une des revendications précédentes, **caractérisé par le fait qu'**au moins un organe de commande (30, 32) est fabriqué en un matériau céramique.

6. Dispositif de distribution selon l'une des revendications précédentes, **caractérisé par le fait que** les organes de commande (30, 32) sont mutuellement en applique par zones, au moyen de surfaces planes (44), avec effet d'étanchement.

7. Dispositif de distribution selon l'une des revendications précédentes, **caractérisé par le fait que** les canaux d'afflux (16, 18), le canal de décharge (38), le canal de commande (42) et le canal additionnel (40) sont concrètement façonnés sur les organes de commande (30, 32).

8. Dispositif de distribution selon la revendication 7, **caractérisé par le fait qu'**un premier organe de commande (30) est muni des canaux d'afflux (16, 18), du canal de décharge (38) et du canal additionnel (40).

9. Dispositif de distribution selon l'une des revendications 7 ou 8, **caractérisé par le fait que** le second organe de commande (32) est pourvu du canal de commande (42).

10. Dispositif de distribution selon l'une des revendications 7 à 9, **caractérisé par le fait que** les canaux d'afflux (16, 18) et le canal de décharge (38) sont pratiqués sur le premier organe de commande (30) de manière concentrique, en particulier avec répartition angulaire identique, sous la forme de segments d'anneaux circulaires.

11. Dispositif de distribution selon l'une des revendications 7 à 10, **caractérisé par le fait que** le canal additionnel (40) notamment ménagé sous la forme d'un alésage traversant occupe, sur le premier organe de commande (30), une position concentrique aux canaux d'afflux (16, 18) et au canal de décharge (38).

12. Dispositif de distribution selon l'une des revendications précédentes, **caractérisé par le fait que** le canal de commande (42) est réalisé de façon telle que la section transversale du canal de décharge (38), pouvant être dégagée au maximum par ledit canal de commande, corresponde au moins pour l'essentiel à la section transversale du canal additionnel (40).

13. Dispositif de distribution selon l'une des revendications précédentes, **caractérisé par le fait que** le canal de commande (42) présente un évidement comprenant une première région (60) à section transversale de préférence cylindrique, et une seconde région (62) à section transversale de type triangulaire.

14. Robinetterie sanitaire comprenant au moins un raccord (14) d'arrivée d'eau froide, au moins un raccord (12) d'arrivée d'eau chaude, et un dispositif de distribution (10) dévolu au réglage de sections transversales libres desdits raccords d'arrivée (12, 14),
**caractérisée par**
un dispositif de distribution (10) conforme à l'une des revendications précédentes.

15. Robinetterie sanitaire selon la revendication 14, **caractérisée par le fait que** le canal de décharge (38) est en liaison communicante avec une première sortie (48) dont la réalisation est dépourvue de vanne.

16. Robinetterie sanitaire selon la revendication 14 ou 15, **caractérisée par le fait que** le canal additionnel (40) est en liaison communicante avec une seconde sortie (50) dotée d'une vanne d'évacuation (28) affectée à l'ouverture et à l'obturation d'une section transversale libre de ladite sortie (50).

17. Robinetterie sanitaire selon l'une des revendications 14, 15 ou 16, **caractérisée par le fait que** la vanne d'évacuation (28) comporte un organe de manoeuvre (52) réalisé en vue d'une activation de ladite vanne d'évacuation (28) avec pilotage à distance, notamment avec actionnement par une force extérieure.

18. Robinetterie sanitaire selon l'une des revendications 14 à 17, **caractérisée par le fait qu'**un dispositif de détection (56, 58), à commutation sans contact, est réalisé en vue d'engendrer un signal de commande prévu pour une activation de l'organe de manoeuvre (52), de préférence électrique.
